# EUROPEAN PATENT SPECIFICATION

(11) **EP 4 610 808 B1**
(45) Date of publication and mention of the grant of the patent: **04.11.2026**
(21) Application number: 25160562.2
(22) Date of filing: 27.02.2025
(51) Int. Cl.: G06F 8/38, G06F 9/451, G06F 40/20

(54) **USING LARGE LANGUAGE MODEL AGENTS FOR ROBUST AND PERFORMANT USER INTERFACE AUTOMATION**
VERWENDUNG GROSSER SPRACHMODELLAGENTEN ZUR ROBUSTEN UND PERFORMANTEN BENUTZERSCHNITTSTELLENAUTOMATISIERUNG
UTILISATION D'AGENTS DE MODÈLE DE LANGAGE LARGE POUR AUTOMATISATION D'INTERFACE UTILISATEUR ROBUSTE ET PERFORMANTE

(30) Priority: 29.02.2024 US 202418592271
(43) Date of publication of application: 03.09.2025
(73) Proprietor: Workday, Inc., Pleasanton, CA 94588 (US)
(72) Inventor: SALOMONS, Edwin, Dublin (IE); O'CONNOR, Patrick, Dublin (IE)
(74) Representative: Boult Wade Tennant LLP

(56) References cited:
- HAO WEN ET AL: "DroidBot-GPT: GPT-powered UI Automation for Android", ARXIV.ORG, CORNELL UNIVERSITY LIBRARY, 201 OLIN LIBRARY CORNELL UNIVERSITY ITHACA, NY 14853, 14 April 2023 (2023-04-14), XP091484577

## Description

### BACKGROUND

Large language models (LLMs) are a class of machine learning (ML) algorithms that can predict a series of tokens given an input series of tokens. LLMs are frequently used in natural language processing (NLP) to generate text content in response to text input (referred to as a "prompt"). General-purpose models are trained on large corpora of data which adjusts the weights and influences the fidelity of the LLM's output. LLMs can be fine-tuned via additional task-specific training data or supplemented via external data sources, referred to as retrieval-augmented generation (RAG).

Hao Wen et al "DroidBot-GPT: GPT-powered UI Automation for Android', Cornell University Library, 14 April 2023, retrieved from the internet, URL: https://arxiv.org/ abs/2304.07061, discusses a tool that utilizes GPT-like LLMs to automate the interactions with Android mobile applications.

### SUMMARY OF THE INVENTION

The invention is defined by the independent claims. Various embodiments thereof are set out in the dependent claims.

### BRIEF DESCRIPTION OF THE FIGURES

FIG. 1 is a block diagram illustrating an LLM-based UI assistant system according to some of the disclosed embodiments.
FIG. 2 is a block diagram illustrating an automation system according to some of the disclosed embodiments.
FIG. 3 is a block diagram illustrating an autonomous agent according to some of the disclosed embodiments.
FIG. 4 is a flow diagram illustrating a method for automating UI interactions according to some of the disclosed embodiments.
FIG. 5 is a flow diagram illustrating a method for generating UI actions utilizing parameter and prompt caching according to some of the disclosed embodiments.
FIG. 6 is a flow diagram illustrating a method for selecting a cached prompt using randomized and curated approached according to some of the disclosed embodiments. 17532825.JCP.JCP
FIG. 7 is a block diagram of a computing device according to some embodiments of the disclosure.

### DETAILED DESCRIPTION

The disclosed embodiments relate to the use of LLMs for performing user interface (UI) operations. Specifically, the disclosed embodiments describe techniques for optimizing the use of LLMs when performing real-time UI actions in a software application.

According to the invention, the techniques described herein relate to a method including: receiving, by a processor, a natural language instruction from a client device, the natural language instruction describing a task utilizing a software application; generating, by the processor, a user interface action representing the natural language instruction, the user interface action generated by a large language model responsive to an input prompt; executing, by the processor, the user interface action within the software application; and transmitting, by the processor, a result of executing the user interface action to the client device.

According to the invention, the techniques described herein relate to a method, wherein generating the user interface action includes: identifying a parameter in the natural language instruction; caching the parameter; and replacing the parameter with a default value to generate a parameterized version of the natural language instruction.

According to the invention, the techniques described herein relate to a method, wherein generating the user interface action further includes: generating a large language model prompt using the parameterized version of the natural language instruction; inputting the parameterized version of the natural language instruction into the large language model to obtain the user interface action; and rehydrating the user interface action by inserting the parameter into the user interface action.

In some implementations, the techniques described herein relate to a method, wherein inserting the parameter into the user interface action includes replacing the default value appearing in the user interface action with the parameter.

In some implementations, the techniques described herein relate to a method, wherein generating the user interface action further includes: issuing a query to a prompt cache using the parameterized version of the natural language instruction; receiving a cached user interface action responsive to the query; using the cached user interface action as the user interface action; and rehydrating the user interface action by inserting the parameter into the user interface action.

In some implementations, the techniques described herein relate to a method, wherein receiving the cached user interface action responsive to the query includes receiving a random cached user interface action responsive to the query.

In some implementations, the techniques described herein relate to a method, wherein the result of executing the user interface action includes an execution status and the method further includes updating a weighting of the cached user interface action based on the execution status.

In some implementations, the techniques described herein relate to a method, wherein generating the user interface action further includes retrieving a curated user interface action using the parameterized version of the natural language instruction.

In some implementations, the techniques described herein relate to a method, wherein the result of executing the user interface action includes an execution status and the method further includes updating a status of the curated user interface action responsive to the execution status.

In some implementations, the techniques described herein relate to a non-transitory computer-readable storage medium for tangibly storing computer program instructions capable of being executed by a computer processor, the computer program instructions defining steps of: receiving, by the computer processor, a natural language instruction from a client device, the natural language instruction describing a task utilizing a software application; generating, by the computer processor, a user interface action representing the natural language instruction, the user interface action generated by a large language model responsive to an input prompt; executing, by the computer processor, the user interface action within the software application; and transmitting, by the computer processor, a result of executing the user interface action to the client device.

In some implementations, the techniques described herein relate to a non-transitory computer-readable storage medium, wherein generating the user interface action includes: identifying a parameter in the natural language instruction; caching the parameter; and replacing the parameter with a default value to generate a parameterized version of the natural language instruction.

In some implementations, the techniques described herein relate to a non-transitory computer-readable storage medium, wherein generating the user interface action further includes: issuing a query to a prompt cache using the parameterized version of the natural language instruction; receiving a cached user interface action responsive to the query; using the cached user interface action as the user interface action; and rehydrating the user interface action by inserting the parameter into the user interface action.

In some implementations, the techniques described herein relate to a non-transitory computer-readable storage medium, wherein receiving the cached user interface action responsive to the query includes receiving a random cached user interface action responsive to the query.

In some implementations, the techniques described herein relate to a non-transitory computer-readable storage medium, wherein the result of executing the user interface action includes an execution status and the steps further includes updating a weighting of the cached user interface action based on the execution status.

In some implementations, the techniques described herein relate to a non-transitory computer-readable storage medium, wherein generating the user interface action further includes retrieving a curated user interface action using the parameterized version of the natural language instruction.

In some implementations, the techniques described herein relate to a non-transitory computer-readable storage medium, wherein the result of executing the user interface action includes an execution status and the steps further includes updating a status of the curated user interface action responsive to the execution status.

In some implementations, the techniques described herein relate to a device including: a processor; and a storage medium for tangibly storing thereon program logic for execution by the processor, the program logic including: logic, executed by the processor, for receiving a natural language instruction from a client device, the natural language instruction describing a task utilizing a software application, logic, executed by the processor, for generating a user interface action representing the natural language instruction, the user interface action generated by a large language model responsive to an input prompt, logic, executed by the processor, for executing the user interface action within the software application, and logic, executed by the processor, for transmitting a result of executing the user interface action to the client device.

In some implementations, the techniques described herein relate to a device, wherein the logic for generating the user interface action includes: logic, executed by the processor, for identifying a parameter in the natural language instruction; logic, executed by the processor, for caching the parameter; and logic, executed by the processor, for replacing the parameter with a default value to generate a parameterized version of the natural language instruction.

In some implementations, the techniques described herein relate to a device, wherein the logic for generating the user interface action further includes: logic, executed by the processor, for issuing a query to a prompt cache using the parameterized version of the natural language instruction; logic, executed by the processor, for receiving a cached user interface action responsive to the query; logic, executed by the processor, for using the cached user interface action as the user interface action; and logic, executed by the processor, for rehydrating the user interface action by inserting the parameter into the user interface action.

In some implementations, the techniques described herein relate to a device, wherein the logic for receiving the cached user interface action responsive to the query further includes logic, executed by the processor, for receiving a random cached user interface action responsive to the query and the program logic further includes logic, executed by the processor, for updating a weighting of the cached user interface action based on an execution status included in the result of executing the user interface action.

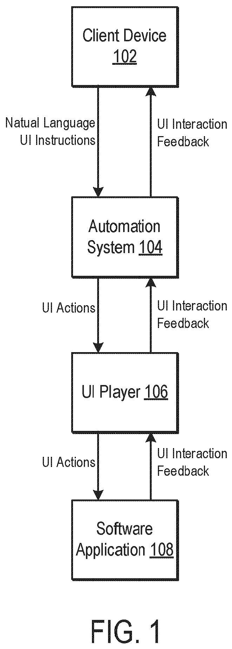

FIG. 1 is a block diagram illustrating an LLM-based UI assistant system according to some of the disclosed embodiments.

As illustrated, an LLM-based UI assistant system includes a client device 102, automation system 104, UI player 106, and a software application 108.

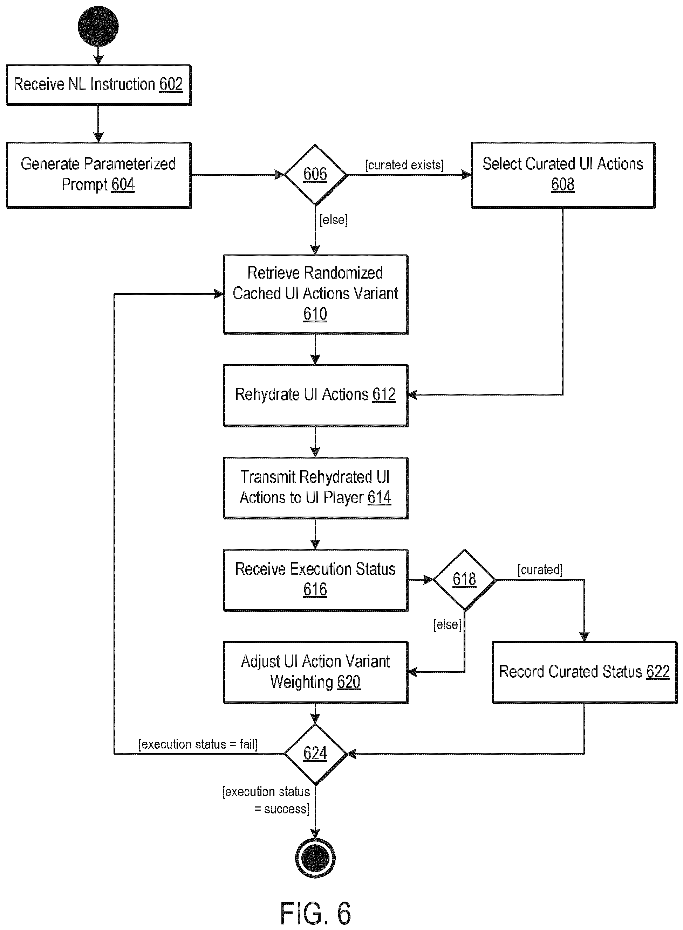

In the illustrated system, client device 102 may comprise a computing device communicatively coupled to the automation system 104. Examples of computing devices are described in the description of FIG. 6 and that description is not repeated herein but is incorporated in its entirety. As one example, client device 102 may include a laptop or desktop computing device. As another example, client device 102 may include a mobile phone or a tablet computing device. In general, client device 102 can comprise any computing device that can receive and/or execute a software application. In the following description, client device 102 is described as a computing device that communicates over a network with software application 108, via automation system 104. For example, software application 108 can comprise a software-as-a-service (SaaS) application, and client 102 make comprise a personal computing device accessing the software application via a web browser or dedicated mobile app.

As illustrated in Figure 1, client device 102 can issue natural language instructions to the automation system 104. In general, natural language instructions refer an intent of one or more tasks to be completed using the software application 108. In some implementations, the natural language instructions are not restricted to describing user interactions with a software application. Nor are natural language instructions limited to a single software application. Indeed, as used herein, natural language instructions can comprise any intent of a user in using one or more software applications. Indeed, in some implementations, the system can pre-process the natural language instructions to identify which software application(s) are suitable for processing the intent, thus freeing a user from explicitly identifying the software application. For example, a natural language instruction may be, "Pay John a $140.00 spot bonus." Here the natural language instruction is a string-based representation of what the user of client device 102 wishes to accomplish using software application 108. In general, client device 102 may provide a text form input or audio input allowing the user to text or speak natural language interface instructions. This input mechanism can be part of software application 108. For example, software application 108 maybe a website that includes a form field for receiving natural language interface instructions. As such, the client device 102 can type, speak, or otherwise provide natural language instructions to the automation system one 104 via such an input.

In the illustrated system, an automation system 104 is located between the client device 102 and the software application 108. Certainly, the client device 102 may communicate directly with the software application 108 to perform other tasks which are not illustrated. That is, automation system 104 may explicitly be connected to the client device 102 solely to receive the natural language instructions. In response, the automation system 104 generates a set of user interface actions. As will be described more herein, user interface actions refer to steps that can be programmatically performed with respect to software application 108. For example, user interface actions can include clicks or taps, filling out forms, navigating a browser, or similar types of actions. In some implementations, user interface actions can be defined using a library such as Selenium which enables programmatic access to software applications. In other implementations, the software application 108 may support its own custom user interface actions exposed via an application interface. In yet other implementations, the automation system 104 may utilize a web browser or web view API to simulate UI actions. Details of automation system 104 are provided in more detail in the following diagrams and those details are not repeated herein.

As illustrated, automation system 104 transmits one or more user interface actions to UI player 106.

UI player 106 acts as an intermediary, executing the user interface actions received from the automation system 104 on the software application 108. This execution mimics human interaction with the software application, thereby enabling tasks to be completed automatically based on the natural language instructions provided by the user of client device 102. The UI player 106 can interpret and execute a variety of UI actions such as clicking buttons, selecting options from drop-down menus, entering text into fields, and navigating between different sections or pages of the software application 108.

In some implementations, UI player 106 may be equipped with a driver or an agent that interfaces directly with the software application 108, or it may operate through a browser or application interface to interact with web-based or standalone software applications. In some embodiments, UI player 106 can utilize a framework like Selenium, WebDriver, or similar automation tools that provide a comprehensive set of commands for controlling and automating user interfaces. This enables the UI player 106 to perform complex sequences of actions that closely mimic those of a human user.

Additionally, UI player 106 is capable of receiving feedback from the software application 108, such as confirmation of actions taken, error messages, or the results of executed tasks. In some implementations, the UI player 106 can also detect the state of software application 108 and compare the detected state to an expected state, this comparison can be used to infer a successful or failed set of actions taken. This feedback mechanism allows the UI player 106 to verify the success of the executed user interface actions and, if necessary, perform corrective actions to ensure the intended outcome of the natural language instructions is achieved.

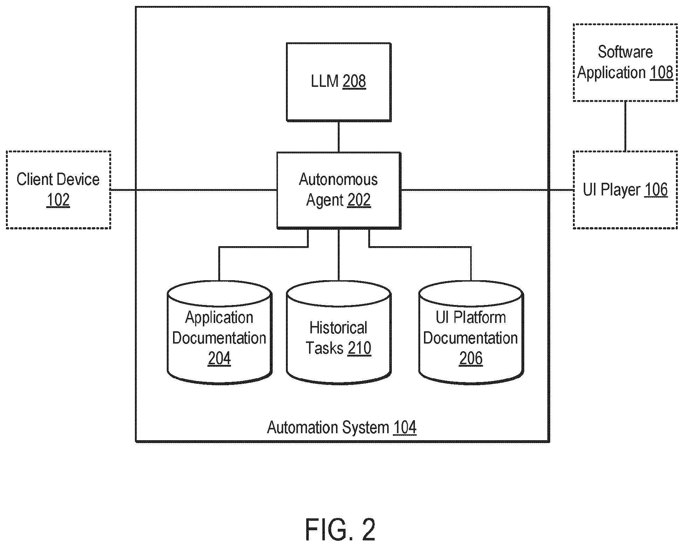

FIG. 2 is a block diagram illustrating an automation system according to some of the disclosed embodiments.

As illustrated, an automation system includes an autonomous agent 202. The autonomous agent 202 can be communicatively coupled to data sources such as an application documentation data source 204 and a UI platform documentation data source 206. The autonomous agent 202 is further communicatively coupled to an LLM 208. In some implementations, the LLM 208 may be part of the automation system 104. In other implementations, the LLM 208 may comprise a third-party (e.g., network connected) LLM. As discussed in FIG. 1, automation system 104 may receive natural language instructions from client device 102 via the autonomous agent 202. The autonomous agent 202 can generate UI actions to transmit to UI player 106 which executes the actions within software application 108.

Autonomous agent 202 in FIG. 2 serves as the core processor within the automation system, facilitating the interaction between the client device 102 and the software application 108 through the UI player 106. This agent is responsible for interpreting the natural language instructions received from the client device 102. Leveraging the connected data sources, namely the application documentation 204 and the UI platform documentation 206, the autonomous agent 202 deciphers the intent and context of the instructions. The application documentation 204 provides the agent with knowledge about the tasks available within the software application 108, essentially what actions the application is capable of performing as well as how to map the intent of the user to the capabilities of the application. Meanwhile, the UI platform documentation 206 contains granular details on how to interact with the application's user interface-information on elements such as buttons, fields, and menus, which are crucial for translating high-level tasks into specific UI actions.

The autonomous agent 202, equipped with this information, then collaborates with the LLM 208 to refine the understanding of the instructions. The LLM 208, which can be an in-system component or an external third-party service like OpenAI^{®}, utilizes advanced language models-potentially including fine-tuning or Retrieval-Augmented Generation (RAG) techniques-to parse and convert the received natural language into a structured format that aligns with the capabilities and constraints of the software application 108.

Application documentation data source 204 can comprise a developer-focused repository that includes documentation of the software application 108 and tasks performable thereon. This data source can be loaded with developer guides, API documentation, operational manuals, and integration protocols. It is structured for efficient retrieval, where documents are split into manageable chunks optimized for specific contexts such as code or API calls. These chunks can then be vectorized, capturing the semantic essence of the documentation, and stored in an accessible vector store. This allows autonomous agent 202 to rapidly retrieve the most relevant sections of documentation in response to natural language queries.

Similarly, the UI platform documentation data source 206 can store a collection of interface design documents, UI component libraries, and interaction pattern guidelines, all formatted to support a retrieval-augmented generation framework. This includes transformation algorithms that chunk the data effectively and embed it into vector stores using text embedding models, ensuring that only the pertinent parts of the UI documentation are fetched during retrieval. This data source enables the autonomous agent 202 to understand the specific UI elements and their interactions at a granular level, allowing for precise generation of UI actions that correspond accurately to the natural language instructions received.

In some implementations, the automation system 104 can further include a historical task data source 210. In some implementations, historical task data source 210 can store a table or document or other format that contains past intent and task executions (e.g., UI actions) mappings. In some implementations, historical task data source 210 can further include a result of the task executions (e.g., success, failure, etc.). In some implementations, only successful task executions may be stored. In some implementations, the mapping can be user-specific while in other implementations the mappings can be globally stored (i.e., user agnostic). In some implementations, these mappings can be used by autonomous agent 202 to improve processing the intent of a natural language instruction.

The final output of this collaboration is a set of UI actions that the autonomous agent 202 sends to the UI player 106. The UI player 106 then executes these actions within the software application 108, completing the instructed task as if it were a human user interacting with the application. Through this process, the autonomous agent 202 effectively bridges the gap between human language and machine-executable commands, enhancing the automation system's ability to carry out complex tasks with simplicity and precision.

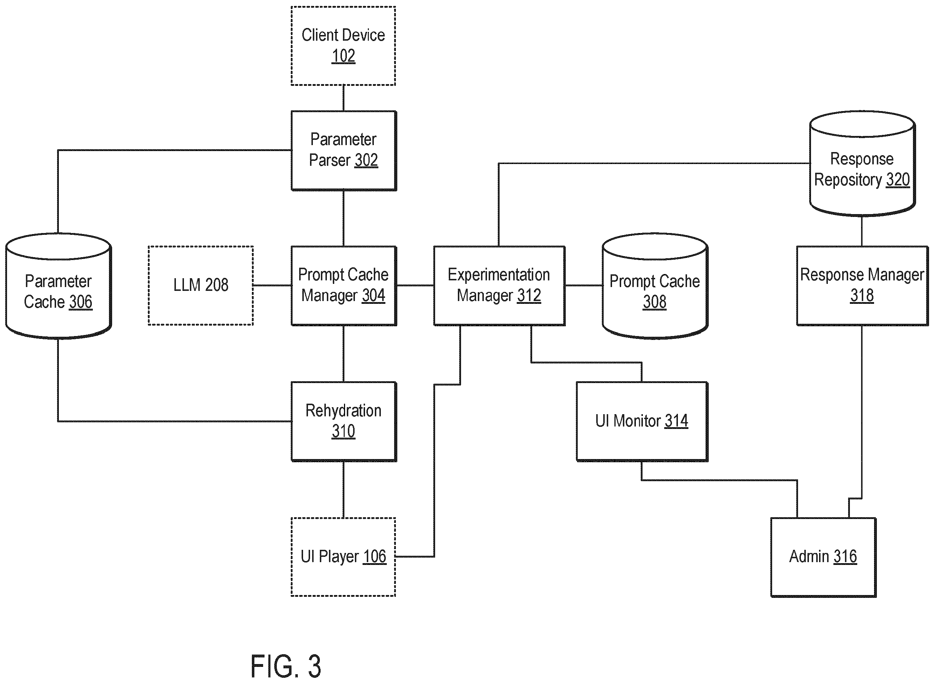

FIG. 3 is a block diagram illustrating an autonomous agent according to some of the disclosed embodiments.

As illustrated, an autonomous agent (e.g., autonomous agent 202) can include a parameter parser 302 that receives natural language instructions from the client device 102. The parameter parser 302 is communicatively coupled to a parameter cache 306 and a prompt cache manager 304. The parameter parser 302 can cache parameters identified in the natural language instruction in parameter cache 306 and generate and transmit a parameterized prompt to the prompt cache manager 304. The prompt cache manager 304 is communicatively coupled to a prompt cache 308 (via experimentation manager 312) to identify UI actions if available and transmits a final prompt to prompt rehydration stage 310. Prompt rehydration stage 310 can rehydrate a prompt using the cached parameters in parameter cache 306 and issue the final UI actions to UI player 106. In some implementations, UI player 106 can report the results of the UI actions to an experimentation manger 312. In some implementations, experimentation manger 312 can update a weighting of any cached prompts used from prompt cache 308. In some implementations, experimentation manger 312 can further transmit execution status data to a UI monitor 314 which presents the results of a set of curated UI actions to an administrator interface 316. The administrator interface 316 can allow for an administrator to define or re-defined UI actions for prompts via a response manager 318. The response manager 318 can then store curated UI actions in a response repository 320.

Parameter parser 302 can analyze and interpret the natural language input, identifying and extract parameters values-such as names, numeric values, and dates-that are embedded within the instructions. Upon receiving a natural language instruction, parameter parser 302 employs techniques such as heuristic analysis, regular expressions, and/or Named Entity Recognition (NER) models to discern and isolate the parameters within the instruction.

Once the parameters are identified, parameter parser 302 caches these extracted values in parameter cache 306. This caching mechanism associates the parameters with a unique identifier for the natural language instruction, ensuring that the specific context and values can be retrieved and utilized in later stages of the process, particularly during the rehydration of prompts and UI actions.

Additionally, parameter parser 302 generates a parameterized prompt based on the extracted parameters. This involves substituting the identified parameters with default or placeholder values to create a generalized version of the instruction. This parameterized prompt is then transmitted to prompt cache manager 304.

Prompt cache manager 304 can retrieve UI actions based on parameterized prompts generated by parameter parser 302. In some implementations, prompt cache manager 304 queries prompt cache 308 for existing prompts that match the parameterized prompts received. In some implementations, this can include exact string matches, wildcard matches, or even semantic similarity comparisons, depending on indexing and retrieval mechanisms of the prompt cache 308. If a matching prompt is found within the prompt cache 308, the corresponding UI actions are retrieved. These actions represent the pre-defined steps that have been identified as the correct procedures to execute in response to the parameterized instruction. The existence of a matching prompt and its associated UI actions in the cache represents a cache hit, indicating that the system can leverage previous computations to fulfill the current request, thereby saving computational resources and time.

Once the relevant UI actions are retrieved from prompt cache 308, the prompt cache manager 304 transmits these actions to prompt rehydration stage 310. This transmission involves passing along the set of UI actions that have been identified as the appropriate response to the originally received natural language instruction, after being generalized through parameterization. Prompt rehydration stage 310 will then rehydrate these actions with the specific parameters that were initially extracted and cached by parameter parser 302, preparing them for execution in the software application through the UI player 106, as described previously.

In the illustrated implementation, a experimentation manger 312 can receive an execution status from UI player 106. In some implementations, this execution status can indicate whether a set of UI actions has failed or succeeded. For UI actions retrieved from prompt cache 308, the experimentation manger 312 can adjust a weighting of the UI actions to ultimately surface the most successful UI actions. Alternatively, the system allows for a administrator interface 316 to manually define UI actions for a given prompt. In some implementations, a response manager 318 allows 316 to store these curated UI actions in response repository 320. During the UI actions selection and generation process, the prompt cache manager 304 can also access the response repository 320 (not illustrated) to retrieve curated UI actions if they exist. If they do, experimentation manager 312 can receive the status of their execution and update their status via UI monitor 314 which can provide feedback to administrator interface 316. In some implementations, response manager 318 provides an interface that allows administrator interface 316 to adjust or update the curated UI actions in response repository 320.

Details of the foregoing components are next described more fully with respect to the following flow diagrams.

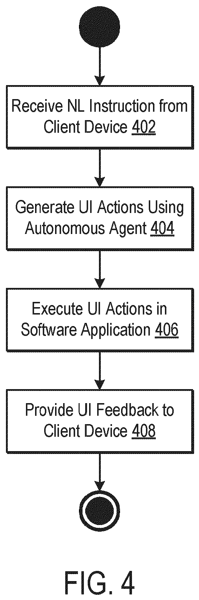

FIG. 4 is a flow diagram illustrating a method for automating UI interactions according to some of the disclosed embodiments.

In step 402, the method can include receiving natural language instructions from a client device.

According to the invention, the natural language instructions can comprise a string representation of an action to take within a software application. No limit is placed on the length or content of the string. In general, the natural language instructions will often be relatively short (e.g., "Pay John a 140-dollar spot bonus") and specific to the functionality provided by the software application (e.g., "search for all pending patent applications and export to a comma-separated value file"). In some implementations, the natural language instructions can be received by either a client device or a server device, depending on implementation. In some implementations, the natural language instructions can be input as text into, for example, a text field or other receiving UI element. In other implementations, the natural language instructions can originate as spoken or visual input and converted to a string representation. For example, voice-to-text processing models can be used to convert spoken natural language instructions to text natural language instructions. In some implementations, audio or video natural language instructions can be used directly if the underlying agent and LLM support these modalities. In some implementations, a software application can provide an input for receiving natural language instructions. In other implementations, a separate application can be provided to receive the natural language instructions.

In step 404, the method can include generating UI actions using an autonomous agent.

Various details and specific implementations of step 404 are provided in the following flow diagrams. In general, step 404 can include inputting the natural language instructions into an artificial intelligence (AI) system to receive a series of actions to undertake with respect to the software application. In some implementations, this AI system can comprise an LLM, such as a transform-based LLM. For example, the AI system can comprise a GPT, LLaMA, or similar type of LLM. In some implementations, the LLM can comprise a general-purpose LLM. However, in other implementations, the LLM can comprise a fine-tuned LLM that is fine-tuned using one or more of application documentation (e.g., documentation that describes high-level actions or tasks that can be performed with the software application) and UI platform documentation (e.g., documentation that describes how to use a software application from the user interaction perspective). In other implementations, the same documentation can be used as external (e.g., vectorized) documents in a RAG-based LLM system.

According to the invention, step 404 can include inputting the natural language instructions into the LLM (e.g., general-purpose, fine-tuned, or RAG-based) and receiving a set of UI actions. For example, in response to the natural language instructions "pay John a 140-dollar spot bonus," the LLM may output the UI actions:
1. Navigate to Task "Request Payment"
2. Set fields: "John Adams, $140, Spot"
3. Click Submit button

In some implementations, the UI actions may comprise text descriptions of how to use a software application. In other implementations, the UI actions may comprise player-specific actions. For example, as will be discussed, in some implementations the UI player may be a specific library for automating UI interactions (e.g., a headless browser) and thus the UI actions can be output as commands for using such a player (e.g., "fill_in :name, 'John Adams'"). In other implementations, the output of the first LLM can be input to a second LLM that can translate text UI actions to UI-player specific actions. For example, a general purpose LLM can be used with a prompt template such as "Translate the following UI action into a Selenium command: Click Submit button."

As will be discussed in the following figures, additional methods for increasing the speed at which UI actions are generated can be employed. However, the foregoing LLM-based approach can be used as a default should those methods fail.

In step 406, the method can include executing the UI actions in a software application.

In step 406, the method can execute the UI actions within the designated software application. In some implementations, execution can be accomplished through various mechanisms, including, but not limited to, scripting languages, automation frameworks, or dedicated execution engines designed for UI automation. For instance, if the UI action calls for filling in a form with specific data ("fill_in :name, 'John Adams'"), the execution layer would activate the relevant UI elements (e.g., text fields, buttons) and input the required information precisely as specified. This could leverage existing automation tools like Selenium for web applications or Appium for mobile apps, which allow for programmatically controlling a browser or mobile app respectively. Additionally, this step may incorporate error handling to manage instances where the UI action cannot be completed as instructed-due to elements being not found, changes in the UI layout, or other unforeseen issues. The successful execution of this step results in the actual completion of tasks within the software application, fully automating the process from natural language instruction to action.

In step 408, the method can include providing UI feedback to the client device or other devices.

In this step, the method culminates with the delivery of feedback regarding the UI actions back to the client device or other designated devices. This feedback mechanism informs the user or system about the outcomes of the executed actions, encompassing a range of possible feedback forms. It may narrate the steps undertaken, visually depict the actions within the UI, or present any encountered errors or confirmations necessary for user acknowledgment. For example, upon successfully completing a UI action, such as submitting a form, the system might display a confirmation message ("Form submitted successfully") or visually highlight the change in the UI to indicate the action's result. Conversely, in scenarios where actions fail or encounter errors, the system is designed to provide descriptive error messages or visual cues (e.g., highlighting the problematic fields in red) to aid in troubleshooting. This feedback loop ensures a transparent communication channel between the system's automated processes and the end-users or supervising systems, enabling them to verify the effectiveness of the actions, understand any issues that arose, and take corrective measures if necessary. Further, as will be discussed, this feedback (e.g., execution status) can be used by internal processes for improving candidate UI actions.

In some implementations, the method can further include providing an interface to the client device that allows the user to submit their feedback regarding the UI actions. For example, the interface can comprise a binary (e.g., thumbs up, thumbs down) control allowing the user to rate the UI actions. As another example, an interface allowing for the submission of a 1-10 score can be used. As another example, a textbox can be provided allowing the user to provide natural language comments. In some implementations, this user feedback can be used to fine-tune the systems generation of prompts and UI actions as described herein.

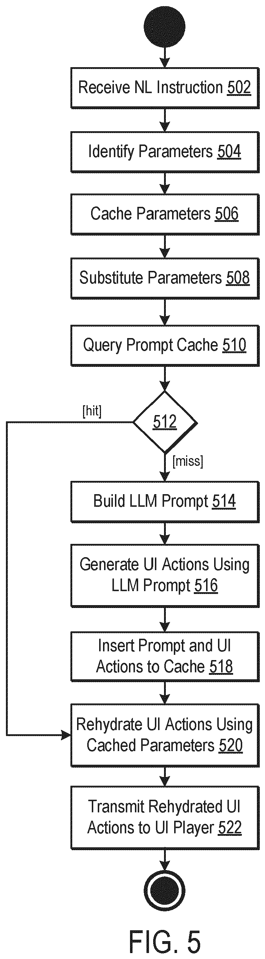

FIG. 5 is a flow diagram illustrating a method for generating UI actions utilizing parameter and prompt caching according to some of the disclosed embodiments.

In step 502, the method can include receiving a natural language instruction from a client device. Details of receiving a natural language instruction are provided in the description of step 402 and not repeated herein.

In step 504, the method can include identifying any parameters present in the natural language instruction.

In some implementations, a parameter refers to words or phrases in a natural language instruction that represent variable terms that can be replaced with generic placeholders. In some implementations, parameters can include terms like names, numeric values, dates, etc. For example, in the natural language instruction "Pay John a $140 spot bonus," the terms "John" and "$140" are parameters while the remaining text comprises non-parameter data. That is, the example natural language instruction can be viewed as a template natural language instruction having the form "Pay ___ a ____ spot bonus." Here, this template can be applied to different people and for different amounts. Similarly, the natural language instruction "Give John an extra five days off" includes the parameters "John" and "five." Similarly, the natural language instruction "Schedule my vacation for Feb. 5 through Feb. 12" includes two placeholders of the same type (date), namely "Feb. 5" and "Feb. 12."

According to the invention, the method can use various means to identify parameters in a natural language instruction. In one implementation, the method can utilize heuristic techniques such as using regular expressions to identify parameters. In other implementations, the method can utilize a named entity recognition (NER) model to extract entities from a natural language instruction. In yet another implementation, a generic LLM can also be used with a prompt to extract parameters from a given natural language instruction. In either scenario, a list of parameters is identified within a natural language instruction. In some implementations, this list can include identifying the parameter position (e.g., offset) within the natural language instruction.

In step 506, the method can include caching any identified parameters.

In some implementations, each natural language instruction can be assigned a unique identifier upon receipt. Next, after identifying parameters, the method can include associating the values of the parameters with the unique identifier of the natural language instruction. For example, the natural language instruction "Pay John a $140 spot bonus" can map the parameter values "John" and "$140" to a unique identifier assigned to the natural language instruction. In some implementations, the position of the parameters can also be cached. According to the invention, the method can cache parameters by storing the values in a cache database such as Redis or a similar type of database.

In step 508, the method can include substituting the identified parameters with default values, generating a parameterized instruction.

According to the invention, the method can identify a suitable replacement for parameter and replace the parameter value with a default value. In some implementations, the method can utilize a lookup table that maps parameter types to default values. For example, a lookup table may map a "name" parameter type to "Jane Doe" and a "currency" type to "$100." Certainly, other types can be mapped (e.g., dates, times, ranges, numbers, etc.) as well. In some implementations, as part of step 504, the method can further identify such types and query the lookup table to identify default values. Thus, for example, the natural language instruction "Pay John a $140 spot bonus" can be transformed into "Pay Jane Doe a $100 spot bonus" using the lookup table. In this manner, any similar natural language instructions can be made uniform. For example, "Give Alice a $500 spot bonus" would be converted to "Give Jane Doe a $100 spot bonus." Similarly, "give a $1,000 spot bonus to Bob" would be converted to "give a $100 spot bonus to Jane Doe." As will be discussed, by replacing parameter values with default values, the method can ensure that the underlying changing fields can be harmonized across input formats. Thus, as will be discussed, natural language instructions can be mapped to previously received natural language instructions based on their contextual similarity which is improved by removing terms that can cause downstream systems to consider requests different due to different parameter values.

In step 510, the method can include querying a prompt cache using the parameterized instruction.

In some implementations, a prompt cache can store a mapping of LLM prompts to UI actions. In some implementations, the LLM prompts can comprise keys of a key value store. In some implementations, the LLM prompts can include prompts utilizing default values for natural language instructions. Continuing the previous example, a given prompt in the prompt cache can have the form "Generate UI commands for request Pay Jane Doe a $100 spot bonus." In some implementations, the prompt cache can alternatively only include the natural language instruction that includes the default values. In some implementations, the value associated with a given prompt cache entry can comprise a set of UI actions (e.g., "Navigate to...", "Set field...", etc. as discussed in the description of FIG. 4).

In some implementations, step 510 can be implemented as a textual lookup. That is, in a first implementation, the method can build a prompt using the natural language instruction processed by step 508 and use that prompt as a query value to the prompt cache. In a second implementation, the method can build a query using the natural language instruction processed by step 508 and query the prompt cache accordingly to find matching prompts in the prompt cache.

In other implementations, the prompt cache can be implemented as a vector database, with each prompt in the prompt cache being stored as a text embedding. In this implementation, the method can convert a generated prompt using the natural language instruction processed by step 508 into a text embedding and find the most similar embedding stored in the prompt cache. Since the processed natural language instruction and the prompts in the prompt cache utilize default values for parameters, the embeddings will generally be much more similar than if variable parameter values are used.

In step 512, the method can include determining if a cache hit exists. If so, the method proceeds to step 520 (discussed herein). If not, the method proceeds to step 514. In some implementations, a cache hit can comprise either an exact match (e.g., when using string matching or wildcard matching) or a semantically similar match (e.g., when using text embeddings). In some implementations, step 512 can comprise determining if any semantic similar matches exceed a triggering threshold (e.g., greater than a 0.80 similarity, or similar metric).

In step 514, the method can include building an LLM prompt using the natural language instruction.

As illustrated, step 514 may only be executed when there is no cached prompt in the prompt cache. Thus, in general, step 514 may be executed when an unseen natural language instruction is received. In this scenario, the method can build an LLM prompt using the natural language instruction. According to the invention, this can entail inserting the natural language instruction into a prompt template. For example, the prompt template may include leading or trailing text in which to insert the natural language instruction. For example, this can be in the form of "Generate UI commands for request %REQ%," where "%REQ%" is replaced with the natural language instruction that includes the default values.

In step 516, the method can include generating UI actions using the LLM prompt. In some implementations, this step can include inputting the LLM prompt into an LLM. As described in the previous figures, this LLM can comprise a general-purpose LLM, a fine-tuned LLM, a RAG-based LLM or other type of LLM. In general, the LLM will return one or more UI actions that are responsive to the input prompt. Further detail on this process is described in FIG. 4 and not repeated herein.

In step 518, the method can include inserting the prompt and UI actions into the cache.

In some implementations, since step 514 and step 516 are executed for an unseen natural language instruction, the method can cache the resulting UI actions. In some implementations, the method can replace the parameter values in the prompt generated in step 514 with default values, as described in step 508, thus generating a prompt that includes default values. Alternatively, as discussed, the method can use the natural language instruction with parameter values replaced with default values as the cache key. Then, the method can use the UI actions output by the LLM as the cache value and write the cache key and value to the prompt cache for later re-use, as described above.

In step 520, the method can include rehydrating the UI actions using the parameters cached in step 506.

In some implementations, rehydrating UI actions includes querying the parameter cache based on the unique identifier associated with the natural language instruction used to generate the UI actions. As discussed, during processing, the parameter values of the natural language instructions are stored in the parameter cache. When receiving the UI actions, the UI actions will utilize the default values substituted for the parameter values (e.g., "Fill in price with $100," where "$100" is a default parameter value) and replace those default values with the corresponding cached parameter values. In some implementations, the method can re-utilize the default value lookup table to identify the default parameters before querying the parameter cache. Finally, the method can insert the cached parameters, replacing the default parameters with the original parameter values.

In step 522, the method can include transmitting the rehydrated UI actions to a UI player. Details of step 522 are provided in more detail in step 406 of FIG. 4 and those details are not repeated herein. In brief, the UI actions can be transmitted as-is to the UI player. In other implementations, the UI actions can be converted into lower-level instructions (e.g., Selenium or Appium instructions). After receipt, the UI player can execute the UI actions as described previously.

FIG. 6 is a flow diagram illustrating a method for selecting a cached prompt using randomized and curated approached according to some of the disclosed embodiments.

In step 602, the method can include receiving a natural language instruction from a client device. Details of receiving a natural language instruction are provided in the description of step 402 and not repeated herein.

In step 604, the method can include generating a default parameterized prompt. In this step, the method replaces parameter values with default values. Details of this process are the same as that described with respect to step 504, step 506, and step 508 of FIG. 5 and are not repeated herein.

In step 606, the method can include determining if a curated set of UI actions exists. If so, the method can proceed to step 608 where it can include selecting the curated UI actions then proceed to step 612, described herein. In some implementations, the method can access a database of curated UI actions. In some implementations, this database can store a mapping of prompts to UI actions created by editors. In some implementations, this database can structurally be similar to the prompt cache describe previously. However, in some implementations, the UI actions stored in the database can be manually created based on observations of the software application, discussed below.

In step 610, the method determines no curated UI actions exists and retrieves a randomized set of cached UI actions. In some implementations, this step can utilize the prompt cache described above with modifications. Specifically, in some implementations, the prompt cache can be configured to store multiple values (i.e., UI actions) responsive to a single prompt or natural language instruction. Thus, a given prompt can return one set of UI actions selected from a group of possible UI action sets. In this implementation, each set of UI actions can be associated with a weight or score that ranks the set relative to other sets associated with a given prompt. In step 610, the method can randomly or pseud-randomly select one of these UI actions. In some implementations, the method can alternatively use a weighted selection to select the UI actions (e.g., selecting randomly, but weighting higher scoring UI actions higher).

By contrast, if the method determines that curated UI actions exist in the database, the method selects the curated UI actions in step 608. In general, this process can be done in a similar manner (e.g., string matching, vector embedding similarity, etc.) as discussed with respect to step 510. In general, the form of the curated UI actions will be similar or identical to the form of cached UI actions and thus the discussion regarding cached UI actions is equally applicable to curated UI actions.

In step 612, after receiving either the curated UI actions or randomized cached UI actions, the method can include rehydrating the UI actions using cached parameters. Details of rehydrating UI actions is provided in the description of step 520, the disclosure of which is incorporated herein.

In step 614, the method can include transmitting the rehydrated UI actions to a UI player. Details of transmitting the rehydrated UI actions to a UI player is provided in the description of step 522, the disclosure of which is incorporated herein.

In step 616, the method can include receiving an execution status of the UI actions. In some implementations, the UI player can report an execution status. In some implementations, the execution status can represent whether or not the UI actions were successfully executed or failed during execution. In some implementations, the UI player can monitor the executed UI actions and return a success if all actions are successful or return a failure if any UI actions fail. In some implementations, the UI player can return a failure upon detecting the first failure.

In step 618, the method can include determining if the UI actions were curated UI actions or cached UI actions. In some implementations, the method can track the origination of the UI actions throughout the preceding steps using a flag or similar identifier.

In step 622, if the method determines the UI actions were curated, the method can include recording a status of the curated UI actions for administrative review. In some implementations, the method can write the result of the execution status to a dedicated administrator panel or database that allows for manual review of curated UI actions. If the execution status indicates a failure, an administrator may manually revise the curated UI actions based on the detected failure. Alternatively, if the execution status is a success, the administrator may take no action on the curated UI actions.

In step 620, alternatively, if the UI actions were cached UI actions, the method can include adjusting a weighting of the cached UI actions based on the execution status. In this step, since the cached UI actions include multiple sets of UI actions for any given prompt, the method will select the UI actions used and adjust a weighting, score, or other parameter associated with the executed UI actions. In some implementations, the method can decrease the weighting of a set of UI actions if the execution status is a failure. Alternatively, the method can increase the weighting of a set of UI actions if the execution status is a success. In this manner, the method can dynamically increase the weighting of those UI actions that are successful and decrease the weighting of those UI actions that fail. In this manner, combined with the process of step 610, the method can eventually remove those UI actions that fail frequently. Indeed, in some implementations, as part of step 620, the method may proactively delete a set of UI actions from the prompt cache if decreasing the weighting results in a score below a minimum threshold.

In step 624, the method can determine if the execution status with a success or failure. If the execution succeeds, the method ends. Alternatively, if the execution fails, the method can return to step 610 and continue to select new UI actions until a successful status is returned. As illustrated, step 624 represents a loop such that eventually a successful set of UI actions is selected (or generated) and executed to complete a response to a natural language instruction. Thus, for example, if a first set of cached UI actions fails, the weighting is decreased (step 620) and a new set of UI actions is selected (step 610). In some implementations, the method can temporarily disable the most recently executed UI actions to prevent replaying the same failure, although this may not be necessary as the system will rapidly decrease the weighting if the same instructions are repeated. Further, if the method fails on all sets of UI actions, the method may default to requesting new UI actions from an LLM as described in FIG. 4. Further, in some implementations, the method can be configured to temporarily disable curated UI actions upon a failure (e.g., as part of step 622), thus preventing more than one execution of curated UI actions.

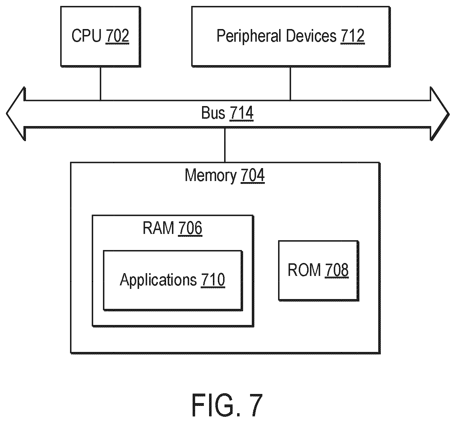

FIG. 7 is a block diagram of a computing device according to some embodiments of the disclosure.

As illustrated, the device includes a processor or central processing unit (CPU) such as CPU 702 in communication with a memory 704 via a bus 714. The device also includes one or more input/output (I/O) or peripheral devices 712. Examples of peripheral devices include, but are not limited to, network interfaces, audio interfaces, display devices, keypads, mice, keyboard, touch screens, illuminators, haptic interfaces, global positioning system (GPS) receivers, cameras, or other optical, thermal, or electromagnetic sensors.

In some embodiments, the CPU 702 may comprise a general-purpose CPU. The CPU 702 may comprise a single-core or multiple-core CPU. The CPU 702 may comprise a system-on-a-chip (SoC) or a similar embedded system. In some embodiments, a graphics processing unit (GPU) may be used in place of, or in combination with, a CPU 702. Memory 704 may comprise a memory system including a dynamic random-access memory (DRAM), static random-access memory (SRAM), Flash (e.g., NAND Flash), or combinations thereof. In one embodiment, the bus 714 may comprise a Peripheral Component Interconnect Express (PCIe) bus. In some embodiments, the bus 714 may comprise multiple busses instead of a single bus.

Memory 704 illustrates an example of a non-transitory computer storage media for the storage of information such as computer-readable instructions, data structures, program modules, or other data. Memory 704 can store a basic input/output system (BIOS) in read-only memory (ROM), such as ROM 708 for controlling the low-level operation of the device. The memory can also store an operating system in random-access memory (RAM) for controlling the operation of the device.

Applications 710 may include computer-executable instructions which, when executed by the device, perform any of the methods (or portions of the methods) described previously in the description of the preceding figures. In some embodiments, the software or programs implementing the method embodiments can be read from a hard disk drive (not illustrated) and temporarily stored in RAM 706 by CPU 702. CPU 702 may then read the software or data from RAM 706, process them, and store them in RAM 706 again.

The device may optionally communicate with a base station (not shown) or directly with another computing device. One or more network interfaces in peripheral devices 712 are sometimes referred to as a transceiver, transceiving device, or network interface card (NIC).

An audio interface in peripheral devices 712 produces and receives audio signals such as the sound of a human voice. For example, an audio interface may be coupled to a speaker and microphone (not shown) to enable telecommunication with others or generate an audio acknowledgment for some action. Displays in peripheral devices 712 may comprise liquid crystal display (LCD), gas plasma, light-emitting diode (LED), or any other type of display device used with a computing device. A display may also include a touch-sensitive screen arranged to receive input from an object such as a stylus or a digit from a human hand.

A keypad in peripheral devices 712 may comprise any input device arranged to receive input from a user. An illuminator in peripheral devices 712 may provide a status indication or provide light. The device can also comprise an input/output interface in peripheral devices 712 for communication with external devices, using communication technologies, such as USB, infrared, Bluetooth^{®}, or the like. A haptic interface in peripheral devices 712 provides tactile feedback to a user of the client device.

A GPS receiver in peripheral devices 712 can determine the physical coordinates of the device on the surface of the Earth, which typically outputs a location as latitude and longitude values. A GPS receiver can also employ other geo-positioning mechanisms, including, but not limited to, triangulation, assisted GPS (AGPS), E-OTD, CI, SAI, ETA, BSS, or the like, to further determine the physical location of the device on the surface of the Earth. In one embodiment, however, the device may communicate through other components, providing other information that may be employed to determine the physical location of the device, including, for example, a media access control (MAC) address, Internet Protocol (IP) address, or the like.

The device may include more or fewer components than those shown, depending on the deployment or usage of the device. For example, a server computing device, such as a rack-mounted server, may not include audio interfaces, displays, keypads, illuminators, haptic interfaces, Global Positioning System (GPS) receivers, or cameras/sensors. Some devices may include additional components not shown, such as graphics processing unit (GPU) devices, cryptographic co-processors, artificial intelligence (AI) accelerators, or other peripheral devices.

The subject matter disclosed above may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The preceding detailed description is, therefore, not intended to be taken in a limiting sense.

Throughout the specification and claims, terms may have nuanced meanings suggested or implied in context beyond an explicitly stated meaning. Likewise, the phrase "in an embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and," "or," or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The present disclosure is described with reference to block diagrams and operational illustrations of methods and devices. It is understood that each block of the block diagrams or operational illustrations, and combinations of blocks in the block diagrams or operational illustrations, can be implemented by means of analog or digital hardware and computer program instructions. These computer program instructions can be provided to a processor of a general-purpose computer to alter its function as detailed herein, a special purpose computer, application-specific integrated circuit (ASIC), or other programmable data processing apparatus, such that the instructions, which execute via the processor of the computer or other programmable data processing apparatus, implement the functions/acts specified in the block diagrams or operational block or blocks. In some alternate implementations, the functions or acts noted in the blocks can occur out of the order noted in the operational illustrations. For example, two blocks shown in succession can in fact be executed substantially concurrently or the blocks can sometimes be executed in the reverse order, depending upon the functionality or acts involved.

## Claims

1. A method comprising:
receiving (402), by a processor, a natural language instruction from a client device, the natural language instruction describing a task utilizing a software application;
generating (404), by the processor, a user interface action representing the natural language instruction,
wherein generating the user interface action comprises:
identifying (504) a parameter in the natural language instruction,
caching (506) the parameter, and
replacing (508) the parameter with a default value to generate a parameterized version of the natural language instruction, and
wherein the user interface action is generated by a large language model responsive to an input prompt based on the parameterized version of the natural language instruction;
executing (406), by the processor, the user interface action within the software application; and
transmitting (408), by the processor, a result of executing the user interface action to the client device.

2. The method of claim 1, wherein generating the user interface action further comprises:
generating a large language model prompt using the parameterized version of the natural language instruction;
inputting the parameterized version of the natural language instruction into the large language model to obtain the user interface action; and
rehydrating the user interface action by inserting the parameter into the user interface action.

3. The method of claim 2, wherein inserting the parameter into the user interface action comprises replacing the default value appearing in the user interface action with the parameter.

4. The method of any one of the preceding claims, wherein generating the user interface action further comprises:
issuing a query to a prompt cache using the parameterized version of the natural language instruction;
receiving a cached user interface action responsive to the query;
using the cached user interface action as the user interface action; and
rehydrating the user interface action by inserting the parameter into the user interface action.

5. The method of claim 4, wherein receiving the cached user interface action responsive to the query comprises receiving a random cached user interface action responsive to the query.

6. The method of claim 5, wherein the result of executing the user interface action includes an execution status and the method further comprises updating a weighting of the cached user interface action based on the execution status.

7. The method of any one of the preceding claims, wherein generating the user interface action further comprises retrieving a curated user interface action using the parameterized version of the natural language instruction.

8. The method of claim 7, wherein the result of executing the user interface action includes an execution status and the method further comprises updating a status of the curated user interface action responsive to the execution status.

9. A system comprising one or more processors, the one or more processors arranged to carry out the method of any one of the preceding claims.

10. A computer program which, when executed by one or more processors, causes the one or more processors to carry out the method of any one of claims 1 to 8.

11. A computer readable medium storing the computer program of claim 10.

## Patentansprüche

1. Verfahren, umfassend:
Empfangen (402) einer natürlichsprachlichen Anweisung durch einen Prozessor von einer Clientvorrichtung, wobei die natürlichsprachliche Anweisung eine Aufgabe unter Verwendung einer Softwareanwendung beschreibt;
Generieren (404) einer Benutzerschnittstellenaktion, die die natürliche Sprachanweisung darstellt, durch den Prozessor,
wobei das Generieren der Benutzerschnittstellenaktion Folgendes umfasst:
Identifizieren (504) eines Parameters in der natürlichsprachlichen Anweisung,
Zwischenspeichern (506) des Parameters, und
Ersetzen (508) des Parameters durch einen Standardwert, um eine parametrisierte Version der natürlichsprachlichen Anweisung zu generieren, und
wobei die Benutzerschnittstellenaktion durch ein großes Sprachmodell als Reaktion auf eine Eingabeaufforderung basierend auf der parametrisierten Version der natürlichsprachlichen Anweisung generiert wird;
Ausführen (406) der Benutzerschnittstellenaktion innerhalb der Softwareanwendung durch den Prozessor; und
Übertragen (408) eines Ergebnisses der Ausführung der Benutzerschnittstellenaktion an die Clientvorrichtung durch den Prozessor.

2. Verfahren nach Anspruch 1, wobei das Generieren der Benutzerschnittstellenaktion weiter Folgendes umfasst:
Generieren einer Aufforderung eines großen Sprachmodells unter Verwendung der parametrisierten Version der natürlichsprachlichen Anweisung;
Eingeben der parametrisierten Version der natürlichsprachlichen Anweisung in das große Sprachmodell, um die Benutzerschnittstellenaktion zu erhalten; und
Rehydrieren der Benutzerschnittstellenaktion durch Einfügen des Parameters in die Benutzerschnittstellenaktion.

3. Verfahren nach Anspruch 2, wobei das Einfügen des Parameters in die Benutzerschnittstellenaktion das Ersetzen des in der Benutzerschnittstellenaktion angezeigten Standardwerts durch den Parameter umfasst.

4. Verfahren nach einem der vorstehenden Ansprüche, wobei das Generieren der Benutzerschnittstellenaktion weiter Folgendes umfasst:
Senden einer Abfrage an einen Aufforderungszwischenspeicher unter Verwendung der parametrisierten Version der natürlichsprachlichen Anweisung;
Empfangen einer zwischengespeicherten Benutzerschnittstellenaktion als Reaktion auf die Abfrage;
Verwenden der zwischengespeicherten Benutzerschnittstellenaktion als Benutzerschnittstellenaktion; und
Rehydrieren der Benutzerschnittstellenaktion durch Einfügen des Parameters in die Benutzerschnittstellenaktion.

5. Verfahren nach Anspruch 4, wobei das Empfangen der zwischengespeicherten Benutzerschnittstellenaktion als Reaktion auf die Abfrage das Empfangen einer zufälligen zwischengespeicherten Benutzerschnittstellenaktion als Reaktion auf die Abfrage umfasst.

6. Verfahren nach Anspruch 5, wobei das Ergebnis der Ausführung der Benutzerschnittstellenaktion einen Ausführungsstatus einschließt und das Verfahren weiter das Aktualisieren einer Gewichtung der zwischengespeicherten Benutzerschnittstellenaktion auf der Grundlage des Ausführungsstatus umfasst.

7. Verfahren nach einem der vorstehenden Ansprüche, wobei das Generieren der Benutzerschnittstellenaktion weiter das Abrufen einer kuratierten Benutzerschnittstellenaktion unter Verwendung der parametrisierten Version der natürlichsprachlichen Anweisung umfasst.

8. Verfahren nach Anspruch 7, wobei das Ergebnis der Ausführung der Benutzerschnittstellenaktion einen Ausführungsstatus einschließt und das Verfahren weiter das Aktualisieren eines Status der kuratierten Benutzerschnittstellenaktion als Reaktion auf den Ausführungsstatus umfasst.

9. System, umfassend einen oder mehrere Prozessoren, wobei der eine oder die mehreren Prozessoren so angeordnet sind, dass sie das Verfahren nach einem der vorstehenden Ansprüche durchführen.

10. Computerprogramm, das, wenn es durch einen oder mehrere Prozessoren ausgeführt wird, den einen oder die mehreren Prozessoren veranlasst, das Verfahren nach einem der Ansprüche 1 bis 8 durchzuführen.

11. Computerlesbares Medium, das das Computerprogramm nach Anspruch 10 speichert.

## Revendications

1. Procédé comprenant :
la réception (402), par un processeur, d'une instruction en langage naturel provenant d'un dispositif client, l'instruction en langage naturel décrivant une tâche utilisant une application logicielle ;
la génération (404), par le processeur, d'une action d'interface utilisateur représentant l'instruction en langage naturel,
dans lequel la génération de l'action d'interface utilisateur comprend :
l'identification (504) d'un paramètre dans l'instruction en langage naturel,
la mise en cache (506) du paramètre, et
le remplacement (508) du paramètre par une valeur par défaut pour générer une version paramétrée de l'instruction en langage naturel, et
dans lequel l'action d'interface utilisateur est générée par un grand modèle de langage en réponse à une invite d'entrée sur la base de la version paramétrée de l'instruction en langage naturel ;
l'exécution (406), par le processeur, de l'action d'interface utilisateur au sein de l'application logicielle ; et
la transmission (408), par le processeur, d'un résultat de l'exécution de l'action d'interface utilisateur au dispositif client.

2. Procédé selon la revendication 1, dans lequel la génération de l'action d'interface utilisateur comprend en outre :
la génération d'une invite de grand modèle de langage à l'aide de la version paramétrée de l'instruction en langage naturel ;
l'entrée de la version paramétrée de l'instruction en langage naturel dans le grand modèle de langage afin d'obtenir l'action d'interface utilisateur ; et
la réhydratation de l'action d'interface utilisateur en insérant le paramètre dans l'action d'interface utilisateur.

3. Procédé selon la revendication 2, dans lequel l'insertion du paramètre dans l'action d'interface utilisateur comprend le remplacement de la valeur par défaut apparaissant dans l'action d'interface utilisateur par le paramètre.

4. Procédé selon l'une quelconque des revendications précédentes, dans lequel la génération de l'action d'interface utilisateur comprend en outre :
l'émission d'une requête à un cache d'invite à l'aide de la version paramétrée de l'instruction en langage naturel ;
la réception d'une action d'interface utilisateur mise en cache en réponse à la requête ;
l'utilisation de l'action d'interface utilisateur mise en cache comme action d'interface utilisateur ; et
la réhydratation de l'action d'interface utilisateur en insérant le paramètre dans l'action d'interface utilisateur.

5. Procédé selon la revendication 4, dans lequel la réception de l'action d'interface utilisateur mise en cache en réponse à la requête comprend la réception d'une action d'interface utilisateur mise en cache aléatoire en réponse à la requête.

6. Procédé selon la revendication 5, dans lequel le résultat de l'exécution de l'action d'interface utilisateur inclut un état d'exécution et le procédé comprend en outre la mise à jour d'une pondération de l'action d'interface utilisateur mise en cache sur la base de l'état d'exécution.

7. Procédé selon l'une quelconque des revendications précédentes, dans lequel la génération de l'action d'interface utilisateur comprend en outre la récupération d'une action d'interface utilisateur sélectionnée à l'aide de la version paramétrée de l'instruction en langage naturel.

8. Procédé selon la revendication 7, dans lequel le résultat de l'exécution de l'action d'interface utilisateur inclut un état d'exécution et le procédé comprend en outre la mise à jour d'un état de l'action d'interface utilisateur sélectionnée en réponse à l'état d'exécution.

9. Système comprenant un ou plusieurs processeurs, le ou les processeurs étant agencés pour réaliser le procédé selon l'une quelconque des revendications précédentes.

10. Programme informatique qui, lorsqu'il est exécuté par un ou plusieurs processeurs, amène le ou les processeurs à réaliser le procédé selon l'une quelconque des revendications 1 à 8.

11. Support lisible par ordinateur stockant le programme informatique selon la revendication 10.
